# EUROPÄISCHE PATENTSCHRIFT

(11) **EP 3 870 939 B1**
(45) Veröffentlichungstag und Bekanntmachung des Hinweises auf die Patenterteilung: **20.12.2023**
(21) Anmeldenummer: 19801676.8
(22) Anmeldetag: 21.10.2019
(51) Int. Cl.: G01F 1/66, G01F 1/667

(54) **MESSVORRICHTUNG ZUR BESTIMMUNG DES DURCHFLUSSES EINES DURCH EINEN ROHRABSCHNITT HINDURCHSTRÖMENDEN FLUIDS**
MEASUREMENT ASSEMBLY FOR DETERMINING THE FLOW THROUGH A PIPE SECTION
ENSEMBLE DE MESURE POUR DÉTERMINER LE DÉBIT À TRAVERS UNE SECTION DE TUYAU

(30) Priorität: 25.10.2018 DE 102018126613
(43) Veröffentlichungstag der Anmeldung: 01.09.2021
(73) Patentinhaber: Sensus Spectrum LLC, Morrisville, NC 27560 (US)
(72) Erfinder: BERTRAM, Carsten, 30419 Hannover (DE); PFEIFFER, Andreas, 30627 Hannover (DE)
(74) Vertreter: Patentanwälte Dr. Keller, Schwertfeger Partnerschaft mbB
(86) Internationale Anmeldenummer: PCT/EP2019/078484
(87) Internationale Veröffentlichungsnummer: WO 2020/083805

(56) Entgegenhaltungen:
- EP-A1- 0 036 658
- EP-A1- 1 967 828
- EP-A1- 2 236 994
- EP-A1- 2 386 836
- WO-A1-00/45161
- DE-A1- 2 461 403
- DE-A1-102007 058 132
- DE-B3-102014 109 772
- DE-U1-202013 101 798
- JP-A- 2018 077 081

## Beschreibung

### Technisches Gebiet:

Die vorliegende Erfindung betrifft eine Messvorrichtung zur Bestimmung des Durchflusses eines durch einen Rohrabschnitt hindurchströmenden Fluids nach dem Oberbegriff des Anspruchs 1. Eine solche Messvorrichtung ist beispielsweise aus der EP 1 967 828 A1 bekannt. Insbesondere betrifft die vorliegende Erfindung eine Messvorrichtung zur Bestimmung des Durchflusses eines durch einen Rohrabschnitt durchfließenden Fluids mittels Ultraschallsensoren nach dem Laufzeitdifferenzverfahren.

### Stand der Technik:

Bei der Bestimmung des Durchflusses eines durch einen Rohrabschnitt hindurchströmenden Fluids mittels Ultraschallsensoren nach dem Laufzeitdifferenzverfahren werden akustische Signale mittels eines Ultraschallsensors in ein Messrohr eingekoppelt. Ein Ultraschallempfänger nimmt das Signal am Ende einer vorgegebenen Wegstrecke des Signals auf. Aus der gemessenen Laufzeit des Signals im Vergleich zu einer gemessenen Laufzeit eines Signals in einem Zustand, in dem das Fluid im Messrohr nicht strömt, lässt sich in Kenntnis der Messrohrgeometrie der Durchfluss eines strömenden Fluids durch das Messrohr bestimmen.

Bezüglich der Anordnung der Ultraschallsensoren am Messrohr werden prinzipiell zwei Arten unterschieden. Zum einen existieren Messvorrichtungen, bei denen der Ultraschallsensor auf der Außenseite des Messrohrs befestigt wird. Diese sogenannten Clamp-on Messvorrichtungen lassen sich bautechnisch vergleichsweise einfach realisieren, haben jedoch den Nachteil, dass der Ultraschall durch die Rohrwand des Messrohrs geführt werden muss, was in der Regel zu einer Schwächung des Messsignals führt.

Bei einem anderen Messvorrichtungsaufbau sind in der Rohrwand des Messrohrs Öffnungen vorgesehen, in denen die Ultraschallsensoren angeordnet sind, so dass der Schall nicht durch die Rohrwand in das Fluid eingekoppelt werden muss. Diese Art von Messvorrichtung liefert sehr gute Messergebnisse, stellt jedoch vergleichsweise hohe Anforderungen an die Messvorrichtung selbst, insbesondere an den Ultraschallsensor und den Einbau des Ultraschallsensors in dem Messrohr. So bestehen zum einen besondere Herausforderungen bei der Dichtigkeit der Messvorrichtung. Der Ultraschallsensor ist unmittelbar den Einflüssen des in dem Messrohr strömenden Fluids ausgesetzt. Neben der Tatsache, dass der Ultraschallsensor mit dem Fluid in Berührung kommt, unterliegt er auch Druck- und Temperaturschwankungen, die durch das Fluid verursacht werden.

Wird der Ultraschallsensor dichtend in die im Messrohr vorgesehene Öffnung gesteckt, so besteht die Gefahr, dass ein unter Druck stehendes Fluid in dem Messrohr den Ultraschallsensor nach außen drückt. Da sich der Ultraschallsensor dann nicht mehr in der bestimmungsgemäßen Position befindet, führt dies zu einer Verfälschung der Messergebnisse.

Um Ultraschallsensoren sicher in dem Messrohr zu halten, werden die Ultraschallsensoren häufig mit einem Gewinde versehen und in eine mit einem Gewinde versehene Öffnung des Messrohrs eingeschraubt.

Es wurde festgestellt, dass bei dieser Art von Befestigung Spannungen im Messrohr und/oder Temperatur- und Druckschwankungen des Fluids auf den Ultraschallsensor übertragen werden, was zu unerwünschten Messwertabweichungen führen kann. Darüber hinaus sind Schraubverbindungen bei dem Einsatz von pulverbeschichteten Messrohren weniger geeignet, da beim Einschrauben des Ultraschallsensors in die Öffnung des Messrohrs die Pulverbeschichtung verletzt werden könnte, was anschließend zu einer Korrosionsanfälligkeit an den Befestigungsstellen führt. Dies spielt vor allem bei Messvorrichtungen eine Rolle, die unter feuchten Umgebungsbedingungen wie etwa im freien Feld verwendet werden.

Weiterhin wurden bereits Versuche unternommen, den Ultraschallsensor in entsprechende im Messrohr vorgesehene Öffnungen so einzustecken, dass ein unter Druck stehendes Fluid in dem Messrohr den Ultraschallsensor nicht nach außen drückt. Allerdings lässt sich dies nicht so einfach realisieren, da bei der Montage des Ultraschallsensors darauf zu achten ist, dass der Ultraschallsensor, insbesondere das Koppelelement spannungsfrei eingebaut wird. Eine Komprimierung des Koppelelements beeinflusst die akustischen Eigenschaften des Koppelelements und beschädigt im äußersten Fall sogar das Koppelelement bzw. den Ultraschallsensor.

### Darstellung der Erfindung:

Es ist Aufgabe der vorliegenden Erfindung, eine Messvorrichtung zur Bestimmung des Durchflusses eines durch einen Rohrabschnitt hindurchströmenden Fluids mittels Ultraschallsensoren nach dem Laufzeitdifferenzverfahren bereitzustellen, bei welcher die Ultraschallsensoren sicher in der Öffnung eines Messrohrs befestigt und vorzugsweise keinen äußeren Kräften ausgesetzt sind, die zu einer Beschädigung des Ultraschallsensors führen, und bei welcher nach Möglichkeit keine Korrosion am Messrohr in feuchten Umgebungsbedingungen auftritt.

Erfindungsgemäß wird die Aufgabe gelöst durch eine Messvorrichtung mit den Merkmalen des Anspruchs 1.

Der Ultraschallsensor kann hierbei in die Öffnung eingesteckt, eingeschraubt oder in irgendeiner anderen Art und Weise in der Öffnung befestigt sein.

Die erfindungsgemäße Lösung hat den Vorteil, dass das Halteelement als Fixierung für den wenigstens einen Ultraschallsensor dient, wenn das im Inneren des Messrohrs strömende Fluid Druck auf den Ultraschallsensor ausübt. Weiterhin ist das Halteelement so an dem Messrohr befestigt, dass keine Verschraubungen oder ähnliche Befestigungsmittel am Messrohr selbst notwendig sind. Es werden hierdurch beispielsweise zusätzliche Bohrungen oder Öffnungen an dem Messrohr vermieden, welche das Messrohr im Dauereinsatz schwächen könnten.

In einem Betriebszustand, in dem das durch das Messrohr hindurchströmende Fluid keinen Druck auf den Ultraschallsensor ausübt, liegt das Halteelement drucklos auf dem wenigstens einen Ultraschallsensor an, um zu vermeiden, dass Spannungen aufgrund der Befestigung des Halteelements an dem Messrohr auf den Ultraschallsensor übertragen werden. Das Halteelement sorgt jedoch dafür, dass der Ultraschallsensor in seiner Position bleibt, wenn das durch das Messrohr hindurchströmenden Fluid im Rohr Druck auf den Ultraschallsensor ausübt.

Es ist von Vorteil, dass das Messrohr gewindefrei ausgebildet ist. Insbesondere bei der Verwendung eines Messrohrs aus einem pulverbeschichteten Metall wird dadurch verhindert, dass beim Einschrauben von Bauteilen eine Beschädigung der Pulverbeschichtung auftritt. Hierdurch ist die Messvorrichtung auch für den Einsatz unter feuchten Umgebungsbedingungen geeignet, da Korrosion vermieden wird.

In der Regel weisen die Ultraschallsensoren eine ebene Oberseite auf. Vorzugsweise bildet das Halteelement im montierten Zustand im Querschnitt eine geschlossene Linie, die den Verlauf eines Vielecks, insbesondere Sechsecks aufweist. Hierdurch wird die Auflagefläche zwischen Halteelement und Ultraschallsensor im Vergleich zu einem runden Querschnitt des Halteelements vergrößert. Dies hat zur Folge, dass das Halteelement eine vergleichsweise große Gegenkraft ausüben kann, wenn das im Inneren des Messrohrs durchströmende Fluid einen Druck auf den Ultraschallsensor ausübt.

Besonders vorteilhaft ist es, wenn das Halteelement im montierten Zustand im Querschnitt eine symmetrische Form aufweist, um eine gleichmäßige Kraftverteilung zu erreichen.

Vorzugsweise weist das Messrohr Auflageflächen auf und die Querschnittsform des Halteelements ist komplementär zu der aus den Auflageflächen auf dem Messrohr ausgebildeten Kontur. Die Auflageflächen können aus der Rohrwand selbst, der Oberseite des Ultraschallsensors und der Oberseite eines Messrohrs gebildet sein. Somit kann das Halteelement spielfrei bzw. annähernd spielfrei an dem Messrohr befestigt werden und dennoch im normalen Betriebszustand, in dem das im Inneren des Messrohrs strömende Fluid keine Druck auf den Ultraschallsensor ausübt, druckfrei an dem Ultraschallsensor anliegen.

Für eine einfache Montage ist es von Vorteil, dass das Halteelement wenigstens zwei Haltebügel umfasst, wobei die wenigstens zwei Haltebügel miteinander verbindbar sind.

Vorzugsweise weist das Halteelement einen Haltebügel mit wenigstens zwei Halteabschnitten auf, wobei die Halteabschnitte unter einem vorgegebenen Winkel miteinander verbunden sind, um das Halteelement an die Geometrie des Messrohrs anpassen zu können. Vorzugsweise ist der Haltebügel einstückig bzw. einteilig ausgebildet.

Um eine vergleichsweise große Auflagefläche zu einem Ultraschallsensor mit einer ebenen Oberseite zu haben, ist es von Vorteil, dass wenigstens ein Halteabschnitt plattenförmig ausgebildet ist. Die Größe, insbesondere die Breite des Halteabschnitts sollte auf die Größe des Ultraschallsensors abgestimmt sein. Vorzugsweise ist die Breite des Halteabschnitts größer als die Breite des Ultraschallsensors.

Um zwei Halteelemente einfach miteinander verbinden zu können, ist es von Vorteil, dass wenigstens ein Halteabschnitt einen Befestigungsflansch aufweist.

Eine besonders einfache Montage des Halteelements an dem Messrohr wird dadurch erreicht, dass das Halteelement einen Haltebügel aufweist, bei dem drei Halteabschnitte in Form einer Basis und zwei Schenkeln vorgesehen sind, wobei die Schenkel an entgegengesetzt liegenden Enden der Basis angeordnet sind und unter einem vorgegebenen Winkel von der Basis wegweisen und wobei an dem freien Ende jedes Schenkels ein Befestigungsflansch vorgesehen ist.

Hierdurch lässt sich das Halteelement an eine vorgegebene Geometrie des Messrohrs anpassen und einfach und sicher miteinander verbinden. Beispielsweise können zwei Halteelemente, bei denen die Schenkel mit der Basis jeweils einen Winkel von 120° einschließen, ein Messrohr mit einem sechseckigen Querschnitt umfassen.

Die einzelnen Halteelemente können beispielsweise mittels Schraubverbindungen miteinander verbunden sein.

Bei einer bevorzugten Weiterbildung ist in wenigstens einem Halteabschnitt ein Durchgang vorgesehen, so dass weitere Bauteile wie beispielsweise Temperatur- oder Drucksensoren an dem Messrohr befestigt werden können.

Um eine möglichst spielfreie Befestigung des Haltelements auf dem Messrohr zu erhalten, ist jedem Halteabschnitt eine Auflagefläche auf dem Messrohr zugeordnet.

Bei einer bevorzugten Ausführungsform besitzt die Rohrwand des Messrohrs eine Außenseite, die im Querschnitt eine eckige Kontur und sich in axialer Richtung erstreckende Flächenabschnitte aufweist. Hierdurch bilden sich Auflageflächen für den wenigstens einen Ultraschallsensor und das Halteelement.

Es ist hierbei von besonderem Vorteil, dass das Messrohr wenigstens einen Flächenabschnitt erster Art aufweist, in dem die wenigstens eine Öffnung erster Art zur Aufnahme des wenigstens einen Ultraschallsensors vorgesehen ist und wenigstens einen Flächenabschnitt zweiter Art, an dem das Haltelement abschnittsweise anliegt.

Bei einer Ausführungsform, bei der beispielsweise physikalische Parameter des durch das Messrohr hindurchströmenden Fluids wie etwa Temperatur oder Druck gemessen werden, ist es von Vorteil, dass ein Messsensor mit einer Oberseite und wenigstens eine Öffnung zweiter Art zur Aufnahme eines Messsensors in der Rohrwand vorgesehen sind, wobei das Messrohr wenigstens einen Flächenabschnitt dritter Art aufweist, an dem der Messsensor angeordnet ist. Der Flächenabschnitt dritter Art kann so gestaltet sein, dass das Halteelement im montierten Zustand an der Oberseite des Messsensors anliegt. Somit kann auch im Falle der Verwendung eines Messsensors die symmetrische Form des Halteelements im Querschnitt beibehalten werden, um auf den Ultraschallsensor wirkende Kräfte gleichmäßig zu verteilen.

In dem Fall, in dem eine Vielzahl von Messsensoren verwendet wird, kann bei einer Ausführungsform jeder Flächenabschnitt zweiter Art gegen einen Flächenabschnitt dritter Art ersetzt werden.

Bei einer bevorzugten Weiterbildung ist eine Vielzahl von Ultraschallsensoren vorgesehen, wobei jeweils zwei Ultraschallsensoren ein Sender- und Empfängerpaar bilden und in axialer Richtung des Messrohrs angeordnet sind, und wobei wenigstens zwei Sender- und Empfängerpaare vorgesehen sind, die entlang des Umfangs des Messrohrs angeordnet sind. Das Vorsehen mehrerer Sender- und Empfängerpaare sorgt für eine erhöhte Messgenauigkeit sowie Messsicherheit, da ein Fehler in einem Sender- und Empfängerpaar durch Vergleich mit den restlichen Sender- und Empfängerpaaren festgestellt werden kann.

### Kurze Beschreibung der Zeichnungen:

Bevorzugte Ausführungsformen werden anhand der beigefügten Zeichnungen näher erläutert, in denen zeigen:
- Fig. 1: eine perspektivische Ansicht einer Messvorrichtung in zerlegter Darstellung,
- Fig. 2: das Messrohr in perspektivischer Darstellung,
- Fig. 3: einen Haltebügel,
- Fig. 4: das Messrohr in montiertem Zustand,
- Fig. 5: einen Querschnitt durch die Messvorrichtung in montiertem Zustand und
- Fig. 6: eine Messvorrichtung zur Bestimmung des Durchflusses eines durch einen Rohrabschnitt hindurchströmenden Fluids im Querschnitt, bei der der Einsatz von Halteelementen vorteilhaft ist.

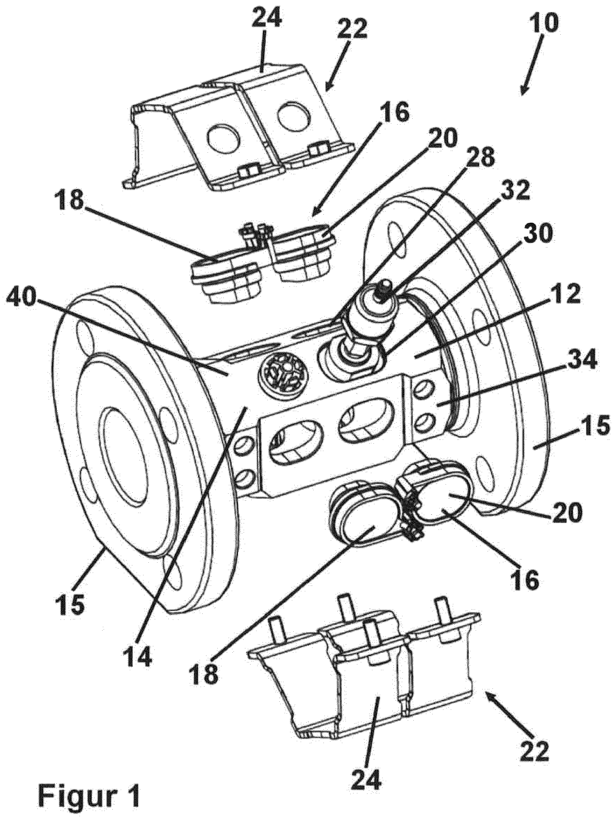

Fig. 1 zeigt eine Messvorrichtung 10 zur Bestimmung des Durchflusses eines durch einen Rohrabschnitt hindurchströmenden Fluids in einem zerlegten Zustand.

Wege zur Ausführung der Erfindung und gewerbliche Verwertbarkeit:
Die Messvorrichtung 10 umfasst ein Messrohr 12, welches eine Rohrwand 14 aufweist. An dem Messrohr 12 sind an beiden Enden Rohrflansche 15 angeordnet, um das Messrohr 12 in ein bestehendes Rohrsystem einbauen zu können.

Das Messrohr 12 besteht beispielsweise aus einem pulverbeschichteten Metall. Der Einsatz andere Materialien wie etwa Kunststoff oder unbeschichtetes Metall ist ebenfalls möglich.

Weiterhin sind drei Paare von Ultraschallsensoren 16 vorgesehen, von denen in Fig. 1 jedoch nur zwei erkennbar sind. Jedes Paar von Ultraschallsensoren 16 besteht aus einem Ultraschallsensor 18 zum Senden eines akustischen Signals und einem Ultraschallsensor 20 zum Empfangen eines akustischen Signals. Ein Paar von Ultraschallsensoren 16 ist jeweils entlang der Längsachse des Messrohrs 12 ausgerichtet. Die drei Ultraschallsensorenpaare 16 sind entlang des Umfangs des Messrohrs in einem Abstand von 120° äquidistant voneinander angeordnet.

Darüber hinaus umfasst die Messvorrichtung 10 ein Halteelement 22 mit Haltebügeln 24.

In der Rohrwand 14 des Messrohrs 12 sind Öffnungen erster Art 28 zur Aufnahme der Ultraschallsensoren 16, 18 vorgesehen. Weiterhin sind Öffnungen zweiter Art 30 in die Rohrwand 14 eingearbeitet, um Messsensoren 32 beispielsweise zur Messung der Temperatur und/oder des Drucks des durch das Messrohr 12 hindurchströmenden Fluids aufzunehmen.

Weder die Öffnungen erster Art 28 noch die die Öffnungen zweiter Art 30 weisen ein Gewinde auf. Auch an den Rohrflanschen 15 sind keine Öffnungen mit Gewinde vorgesehen.

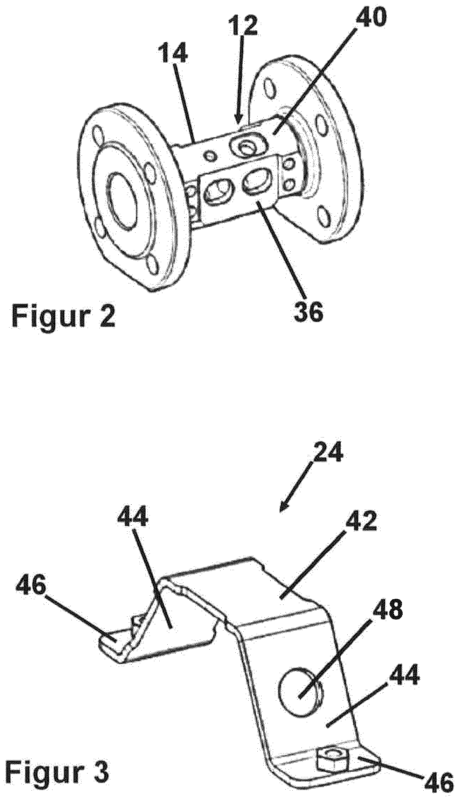

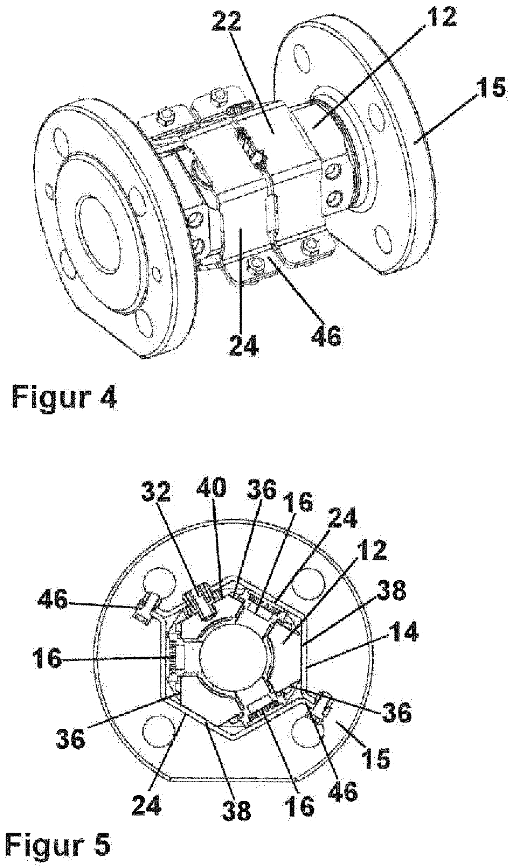

Wie insbesondere in den Figuren 2 und 5 zu erkennen ist, weist das Messrohr 12 eine Rohrwand 14 mit einer Außenseite auf, die im Querschnitt eine eckige Kontur zeigt. Im Detail handelt es sich um einen sechseckigen Querschnitt, wobei die Seitenlängen des Sechsecks unterschiedlich sind.

Weiterhin sind ein Flächenabschnitt erster Art 36, ein Flächenabschnitt zweiter Art 38 und ein Flächenabschnitt dritter Art 40 an der Außenseite des Messrohrs 12 vorgesehen, die sich jeweils in axialer Richtung erstrecken. In dem Flächenabschnitt erster Art 36 sind die Öffnungen erster Art 28 für die Ultraschallsensoren 18, 20 eingearbeitet. In dem Flächenabschnitt dritter Art 40 sind Öffnungen zweiter Art 30 für die Aufnahme von Messsensoren 32 vorgesehen. Im vorliegenden Fall sind drei Flächenabschnitte erster Art 36 vorgesehen, wobei zwischen zwei Flächenabschnitten erster Art 36 jeweils ein Flächenabschnitt zweiter Art 38 oder ein Flächenabschnitt dritter Art 40 angeordnet ist.

Im Inneren weist das Messrohrs 12 einen runden Querschnitt auf.

Fig. 3 zeigt einen Haltebügel 24 in perspektivischer Ansicht. Der Haltebügel 24 umfasst drei plattenförmige Halteabschnitte, die eine Basis 42 und zwei Schenkel 44 bilden. Die Schenkel 44 sind an entgegengesetzt liegenden Enden der Basis 42 angeordnet und weisen einen Winkel von 120° gegenüber der Basis 42 auf. An den freien Enden jedes Schenkels 44 ist ein Befestigungsflansch 46 vorgesehen. Die beiden Befestigungsflansche 46 weisen jeweils nach außen. In einem Schenkel 44 ist ein Durchgang 48 für einen Messsensor 32 eingearbeitet. Die Haltebügel 24 sind einstückig bzw. einteilig ausgebildet und vorzugsweise aus einem Metallelement gebogen. Alternativ können die Haltebügel 24 auch einstückig bzw. einteilig aus einem Kunststoff oder einem anderen geeigneten Material hergestellt sein.

In Fig. 4 ist die Messvorrichtung 10 in einem montierten Zustand gezeigt.

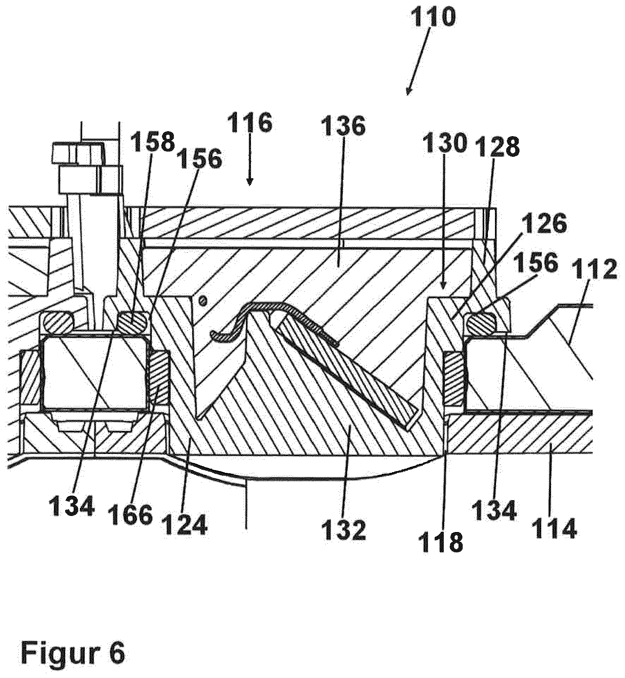

Die Ultraschallsensoren 16, 18 sind in der Öffnung erster Art 28 eingesteckt und vorzugsweise schwimmend gelagert. Unter einer schwimmenden Lagerung wird eine Lagerung verstanden, bei der die Ultraschallsensoren zwar fluiddicht in der Öffnung angeordnet sind, aber dennoch möglichst reibungsarm bzw. mit nur geringer Klemmkraft in der Öffnung gehalten sind. Ein Beispiel hierfür ist in Fig. 6 dargestellt.

Jeweils zwei Haltebügel 24 sind an ihren Befestigungsflanschen 46 zur Ausbildung eines Halteelements 22 miteinander verbunden. Jedes Halteelement 22 bildet eine Art Ring, der sich entlang des Umfangs des Messrohrs 12 erstreckt. Die beiden Halteelemente 24 sind nebeneinander und mit Abstand voneinander an dem Messrohr 12 angeordnet, wobei jedes Halteelement 24 wenigstens einen Ultraschallsensor 18, 20 bedeckt.

Da sich die Ultraschallpaare 16 entlang einer gemeinsamen Umfangslinie an dem Messrohr 12 befinden, reichen zwei Halteelemente 22 aus, um die Ultraschallsensoren 18, 20 am Messrohr 12 zu fixieren.

Nur die Haltebügel 24 sind miteinander verbunden. Eine feste Verbindung zu dem Messrohr 12 besteht nicht. Es sind somit keine Bohrungen oder Haltemittel an dem Messrohr 12 notwendig, um das Haltelement 22 an dem Messrohr 12 zu befestigen. Die Fixierung des Haltelements 24 am Messrohr 12 erfolgt über die eckige Geometrie des Messrohrs 12 und des Halteelements 22 und durch das Vorsehen des Messsensors 32 in dem Messrohr 12, wobei die eckige Geometrie des Messrohrs 12 und des Halteelements 22 ausreichend ist, um das Halteelement 22 sicher am Messrohr 12 zu fixieren.

Fig. 5 zeigt einen Querschnitt durch die montierte Messvorrichtung 10. Die beiden Halteelemente 22 weisen im Querschnitt die Form eines Sechsecks auf. Das Sechseck ist symmetrisch, insbesondere regelmäßig mit gleichen Seitenlängen ausgebildet.

Bei der dargestellten Ausführungsform ist ein Messsensor 32 vorgesehen. Da dieser durch die Öffnung in einem Halteelement 22 hindurchragt, gibt der Messsensor 32 die Ausrichtung des Halteelements 22 auf dem Messrohr 12 vor. Der Schenkel 44, der den Durchgang 48 für den Messsensor 32 aufweist, ist an dem Flächenabschnitt dritter Art 40 zu positionieren. Dadurch ergibt sich, dass die verbleibenden Schenkel und die Basisabschnitte auf den übrigen Flächenabschnitten in der vom Halteelement 22 vorgegebenen Reihenfolge positioniert werden.

Das Halteelement 22 liegt hierbei drucklos auf der Oberseite 21 jedes Ultraschallsensors 18, 20 auf, während das Halteelement 22 direkt auf dem Flächenabschnitt zweiter Art 38 aufliegt. Im Bereich des Flächenabschnitts dritter Art 40 liegt das Halteelement auf der Oberseite des Messsensors 32. Bei dieser Ausführungsform bilden somit die Oberseite jedes Ultraschallsensors 18, 20, der Flächenabschnitt zweiter Art 38 und die Oberseite des Messsensors 32 die Auflageflächen für das Halteelement 22.

Im Betriebszustand fließt ein Fluid durch das Messrohr. In dem Fall, in dem der Druck im Inneren des Messrohrs 12 ansteigt, so dass die Ultraschallsensoren 18, 20 aus ihrer Position herausgedrückt werden, übt das Halteelement 22 eine Gegenkraft aus bzw. verhindert das Halteelement 22, dass sich der Ultraschallsensor 18, 20 aus seiner Position verschiebt. Sind mehrere über den Umfang verteilte Ultraschallpaare 16 vorgesehen, sorgt der symmetrische Aufbau des Halteelements 22 dafür, dass jeder Ultraschallsensor 18, 20 sicher in seiner Position gehalten wird.

Das Halteelement 22 ist aus einem Material mit einem geringen Wärmeausdehnungskoeffizienten hergestellt, um auch bei schwankenden Umgebungstemperaturen die Ultraschallsensoren 18, 20 sicher an dem Messrohr 12 zu halten, auch wenn das im Inneren des Messrohrs12 strömende Fluid einen hohen Druck auf den Ultraschallsensor 18, 20 ausübt.

Weiterhin ist es von Vorteil, dass die Auflageflächen erster Art 36 und die Auflageflächen zweiter Art 38 bzw. dritter Art 40 entlang des Umfangs des Messrohrs 12 im Wechsel vorgesehen sind, um eine Druckbelastung einzelner Ultraschallsensoren18, 20 im Falle eines Innendrucks durch das Fluid zu verhindern.

Bei einer nicht dargestellten Ausführungsform kann das Halteelement auch eine andere als die sechseckige Grundform aufweisen. So ist die Erfindung auch bei Messrohren einsetzbar, die rund sind oder eine andere eckige Geometrie als die angegebene aufweisen. Die Form des Querschnitts des Halteelements ist dann an die runde oder eckige Geometrie des Messrohrs anzupassen. Hierbei können auch Halteelemente eingesetzt werden, die keine Basis, abgewinkelte Schenkel oder Kombinationen von Basis, geraden Schenkeln und abgewinkelten Schenkeln aufweisen. Zusätzlich oder alternativ können mehr als zwei Halteelemente miteinander verbunden werden.

Nach Möglichkeit sollte jeder Haltebügelabschnitt eines Haltelements an einer Oberseite des Messrohrs anliegen. Die Oberseite des Messrohrs kann durch einen Flächenabschnitt des Messrohrs, durch eine Oberseite des Ultraschallsensors sowie durch eine Oberfläche des Messsensors gebildet sein.

Besonders vorteilhaft sind jedoch Ausführungsformen, bei denen das Halteelement im Querschnitt symmetrisch ausgebildet ist und die Ultraschallsensoren äquidistant um das Messrohr angeordnet sind.

Ist der Einsatz von Messsensoren 32 nicht notwendig, kann die Fläche dritter Art 40 durch eine Fläche zweiter Art 38 ersetzt werden.

In Fig. 6 ist eine Messvorrichtung 110 zur Bestimmung des Durchflusses eines durch einen Rohrabschnitt hindurchströmenden Fluids im Querschnitt gezeigt, bei der der Einsatz der Halteelemente 22 von besonderem Vorteil ist.

Fig. 6 zeigt eine Ultraschallanordnung 116 in einem Messrohr 112 mit einem Innenrohr 114. Die Außenwand des Messrohrs 112 entspricht der in den Fig. 1 bis 5 dargestellten Außenwand des Messrohrs, so dass das Messrohr 112 eine Öffnung 118 aufweist, in der eine Ultraschallanordnung 116 angeordnet ist. Die Öffnung 118 des Messrohrs 112 ist gewindefrei, so dass die Ultraschallanordnung in die Öffnung 118 des Messrohrs 112 eingesteckt ist.

Die Ultraschallsensoranordnung 116 umfasst ein Gehäuse 124 mit einem Behälter 126 und einem umlaufenden Rand 128, wobei der Behälter 126 eine offenen Oberseite 130 aufweist und der umlaufende Rand 128 an der Oberseite 130 des Behälters 126 nach außen versetzt an dem Behälter 126 einstückig befestigt ist. Weiterhin ist ein keilförmiges Koppelelement 132 vorgesehen, auf dem ein piezoelektrisches Element angeordnet ist. Das Gehäuse 124 ist mit einer Vergussmasse 136 gefüllt, so dass die Ultraschallsensoranordnung 116 fluiddicht ausgebildet ist.

An der Unterseite134 des umlaufenden Randes 128 ist eine Aufnahme 156 für ein Toleranzausgleichselement 158 vorgesehen. Die Aufnahme 156 für das Toleranzausgleichselement 158 erstreckt sich als ringförmige Nut entlang des Außenumfangs des nach außen versetzten Randes 128. Das Toleranzausgleichselement 158 ist als elastisches ringförmiges Band ausgebildet.

Der umlaufenden Rand 128 liegt mittels des Toleranzausgleichselements 158 auf dem Messrohr 112 auf. Das Toleranzausgleichselement 158 ist in der als Nut ausgebildeten Aufnahme 156 aufgenommen, wobei das Toleranzausgleichselement 158 eine größeren Durchmesser aufweist als die Tiefe der Nut, so dass das Toleranzausgleichselement 158 über die Unterseite 134 des umlaufenden Randes 128 nach außen herausragt. Die Unterseite des umlaufenden Randes ist mit Spiel bzw. geringem Abstand oberhalb des Messrohrs angeordnet, während das Toleranzausgleichselement 158 direkt auf dem Messrohr 112 aufliegt und eine spielfreie Verbindung ausbildet. Hierdurch wird die Ultraschallsensoranordnung 116 auch bei Messrohren mit herstellungsbedingten Maßtoleranzen im Wesentlichen drucklos bzw. kräftefrei in der Öffnung 118 des Messrohrs 112 gehalten.

Zwischen dem Gehäuse 124 und dem Messrohr 112 ist in der Öffnung 118 ein Dichtring 166 vorgesehen, der unterhalb eines Vorsprungs 160 an der Außenseite des Gehäuses angeordnet ist. Der Dichtring 166 sorgt dafür, dass eine dichte Verbindung zwischen Messrohr 112 und Ultraschallsensoranordnung 116 vorliegt.

Die Unterseite des Gehäuses 124 ist an die Geometrie des Messrohrs 112 und des Innenrohrs 114 angepasst, so dass die Ultraschallsensoranordnung 116 im Inneren des Messrohrs 112 flächenbündig mit der Innenwand des Innenrohrs 114 ausgerichtet ist.

Bei der dargestellten Ausführungsform ist die Ultraschallsensoranordnung 116 spielfrei und im Wesentlichen druck- bzw. kräftefrei in einem Messrohr 112 eingebaut. Um zu verhindern, dass ein unter Druck stehendes Fluid in dem Messrohr die Ultraschallsensoranordnung 116 nach außen drückt, können Halteelemente 22 wie in den Figuren 1 bis 5 beschrieben außerhalb des Messrohrs 112 angeordnet werden.

## Patentansprüche

1. Messvorrichtung zur Bestimmung des Durchflusses eines durch einen Rohrabschnitt hindurchströmenden Fluids, umfassend
ein Messrohr (12; 112) mit einer Rohrwand (14),
wenigstens einen Ultraschallsensor (18, 20; 116) zum Senden eines akustischen Signals und/oder Empfangen eines akustischen Signals mit einer Ultraschallsensoroberseite (21) und
ein Halteelement (22),
wobei in der Rohrwand (14) wenigstens eine Öffnung erster Art (28; 118) vorgesehen ist, in der der wenigstens eine Ultraschallsensor (18, 20; 116) einfügbar ist und wobei die Messvorrichtung (10; 110) einen montierten Zustand aufweist, in der das Halteelement (22) das Messrohr (12; 112) ringförmig umfasst und außen an dem wenigstens einen, in die Öffnung erster Art (28; 118) eingefügten Ultraschallsensor (18, 20; 116) anliegt, **dadurch gekennzeichnet, dass** das Halteelement (22) als Fixierung für den wenigstens einen Ultraschallsensor dient, wenn das im Inneren des Messrohrs strömende Fluid Druck auf den Ultraschallsensor ausübt, und dass das Halteelement (22) in einem Betriebszustand, in dem das durch das Messrohr hindurchströmende Fluid keinen Druck auf den Ultraschallsensor ausübt, drucklos an der Ultraschallsensoroberseite anliegt.

2. Messvorrichtung nach einem der vorhergehenden Ansprüche, **dadurch gekennzeichnet, dass** das Messrohr (12; 112) gewindefrei ist.

3. Messvorrichtung nach einem der vorhergehenden Ansprüche, **dadurch gekennzeichnet, dass** das Halteelement (22) im montierten Zustand im Querschnitt eine geschlossene Linie bildet, die den Verlauf eines Vielecks, insbesondere Sechsecks aufweist.

4. Messvorrichtung nach einem der vorhergehenden Ansprüche, **dadurch gekennzeichnet, dass** das Halteelement (22) im montierten Zustand im Querschnitt eine symmetrische Form aufweist.

5. Messvorrichtung nach einem der vorhergehenden Ansprüche, **dadurch gekennzeichnet, dass** das Messrohr Auflageflächen aufweist und die Querschnittsform des Halteelements (22) komplementär zu der aus den Auflageflächen auf dem Messrohr (12) ausgebildeten Kontur ist.

6. Messvorrichtung nach einem der vorhergehenden Ansprüche, **dadurch gekennzeichnet, dass** das Halteelement (22) wenigstens zwei Haltebügel (24) umfasst, wobei wenigstens zwei Haltebügel (24) miteinander verbindbar sind.

7. Messvorrichtung nach einem der vorhergehenden Ansprüche, **dadurch gekennzeichnet, dass** das Halteelement einen Haltebügel mit wenigstens zwei Halteabschnitten aufweist, wobei die Halteabschnitte unter einem vorgegebenen Winkel miteinander verbunden sind.

8. Messvorrichtung nach Anspruch 7, **dadurch gekennzeichnet, dass** wenigstens ein Halteabschnitt plattenförmig ausgebildet ist.

9. Messvorrichtung nach einem der Ansprüche 7 oder 8, **dadurch gekennzeichnet, dass** wenigstens ein Halteabschnitt einen Befestigungsflansch aufweist.

10. Messvorrichtung nach einem der Ansprüche 7 bis 9, **dadurch gekennzeichnet, dass** das Halteelement (22) einen Haltebügel (24) aufweist, bei dem drei Halteabschnitte in Form einer Basis (42) und zwei Schenkel vorgesehen sind, sind, wobei die Schenkel (44) an entgegengesetzt liegenden Enden der Basis (42) angeordnet sind und unter einem vorgegebenen Winkel von der Basis (42) wegweisen und wobei an dem freien Ende jedes Schenkels (44) ein Befestigungsflansch (46) vorgesehen ist.

11. Messvorrichtung nach einem der Ansprüche 7 bis 10, **dadurch gekennzeichnet, dass** in wenigstens einem Halteabschnitt ein Durchgang (48) vorgesehen ist.

12. Messvorrichtung nach einem der Ansprüche 7 bis 11, **dadurch gekennzeichnet, dass** das Messrohr Auflageflächen aufweist und jedem Halteabschnitt eine Auflagefläche auf dem Messrohr (12) zugeordnet ist.

13. Messvorrichtung nach einem der vorhergehenden Ansprüche, **dadurch gekennzeichnet, dass** die Rohrwand (14) des Messrohrs (12; 112) eine Außenseite besitzt, die im Querschnitt eine eckige Kontur und sich in axialer Richtung erstreckende Flächenabschnitte aufweist.

14. Messvorrichtung nach einem der vorhergehenden Ansprüche, **dadurch gekennzeichnet, dass** das Messrohr (12; 112) wenigstens einen Flächenabschnitt erster Art (36) aufweist, in dem die wenigstens eine Öffnung erster Art (28; 118) zur Aufnahme des wenigstens einen Ultraschallsensors (18, 20; 116) vorgesehen ist, sowie wenigstens einen Flächenabschnitt zweiter Art (38), an der das Haltelement (22) abschnittsweise anliegt.

15. Messvorrichtung nach Anspruch 14, **dadurch gekennzeichnet, dass** ein Messsensor (32) mit einer Oberseite (33) und wenigstens eine Öffnung zweiter Art (30) zur Aufnahme des Messsensors (32) in der Rohrwand (14) vorgesehen sind, wobei das Messrohr (12; 112) wenigstens einen Flächenabschnitt dritter Art (40) aufweist, an dem der Messsensor (32) angeordnet ist.

16. Messvorrichtung nach einem der vorhergehenden Ansprüche, **dadurch gekennzeichnet, dass** eine Vielzahl von Ultraschallsensoren (18, 20; 116) vorgesehen ist, wobei jeweils zwei Ultraschallsensoren (18, 20; 116) ein Sender- und Empfängerpaar (16) bilden und in axialer Richtung des Messrohrs (12; 112) angeordnet sind, wobei wenigstens zwei Sender- und Empfängerpaare (16) vorgesehen sind, die entlang des Umfangs des Messrohrs (12; 112) angeordnet sind.

## Claims

1. A measuring device for determining the flow rate of a fluid which flows through a pipe portion, comprising a measuring pipe (12; 112) with a pipe wall (14), at least one ultrasonic sensor (18, 20; 116) for transmitting an acoustic signal and/or receiving an acoustic signal having an ultrasonic sensor upper surface (21), and a holding element (22), wherein in the pipe wall (14), at least one opening of a first type (28; 118) is provided into which the at least one ultrasonic sensor (18, 20; 116) can be inserted, and wherein the measuring device (10; 110) has an assembled state in which the holding element (22) surrounds the measuring pipe (12; 112) in an annular manner and is positioned on the outside of the at least one ultrasonic sensor (18, 20; 116) inserted in the opening of a first type (28; 118), **characterized in that** the holding element (22) serves as a fixation for the at least one ultrasonic sensor when the fluid flowing inside the measuring pipe exerts pressure on the ultrasonic sensor, and wherein in an operating state in which the fluid flowing through the measuring pipe does not exert any pressure on the ultrasonic sensor, the holding element (22) is positioned without pressure on the upper surface of the ultrasonic sensor.

2. The measuring device according to any one of the preceding claims,
**characterized in that** the measuring pipe (12; 112) is designed to be thread-free.

3. The measuring device according to any one of the preceding claims,
**characterized in that**, in the assembled state, the holding element (22) in cross-section forms a continuous line which has the course of a polygon, in particular a hexagon.

4. The measuring device according to any one of the preceding claims, **characterized in that**, in the assembled state, the holding element (22) in cross-section has a symmetrical shape.

5. The measuring device according to any one of the preceding claims, **characterized in that** the measuring pipe has bearing surfaces and the cross-sectional shape of the holding element (22) is complementary to the contour formed from the bearing surfaces on the measuring pipe (12).

6. The measuring device according to any one of the preceding claims, **characterized in that** the holding element (22) comprises at least two retaining brackets (24), wherein at least two retaining brackets (24) are connectable to each other.

7. The measuring device according to any one of the preceding claims, **characterized in that** the holding element comprises a retaining bracket with at least two retaining sections, with the retaining sections being connected to one another at a predetermined angle.

8. The measuring device according to claim 7, **characterized in that** at least one retaining section is plate-shaped.

9. The measuring device according to any one of claims 7 or 8, **characterized in that** at least one retaining section comprises a mounting flange.

10. The measuring device according to any one of claims 7 to 9, **characterized in that** the holding element (22) comprises a retaining bracket (24) with three retaining sections formed as a base (42) and two arms, wherein the arms (44) are positioned at opposite ends of the base (42) and face away from the base (42) at a predetermined angle, and wherein a mounting flange (46) is provided at the free end of each arm (44).

11. The measuring device according to any one of claims 7 to 10, **characterized in that** a passage (48) is provided in at least one retaining section.

12. The measuring device according to any one of claims 7 to 11, **characterized in that** the measuring pipe has bearing surfaces and each retaining section is assigned a bearing surface on the measuring pipe (12).

13. The measuring device according to any one of the preceding claims, **characterized in that** the pipe wall (14) of the measuring pipe (12; 112) has an outer side which in cross-section has an angular contour and surface sections extending in the axial direction.

14. The measuring device according to any one of the preceding claims, **characterized in that** the measuring pipe (12; 112) comprises at least one surface section of a first type (36), in which the at least one opening of a first type (28; 118) is provided for receiving the at least one ultrasonic sensor (18, 20; 116), and that said measuring pipe (12; 112) comprises at least one surface section of a second type (38), on which the holding element (22) is positioned in sections.

15. The measuring device according to claim 14, **characterized in that** in the pipe wall (114) a measuring sensor (32) having an upper surface (33) and at least one opening of a second type (30) for receiving the measuring sensor (32) are provided, wherein the measuring pipe (12; 112) comprises at least one surface section of a third type (40) on which the measuring sensor (32) is positioned.

16. The measuring device according to any one of the preceding claims, **characterized in that** a plurality of ultrasonic sensors (18, 20; 116) is provided, wherein any two ultrasonic sensors (18, 20; 116) form a transmitter and receiver pair (16) and are arranged in the axial direction of the measuring pipe (12; 112), and wherein at least two transmitter and receiver pairs (16) are provided which are arranged along the circumference of the measuring pipe (12; 112).

## Revendications

1. Dispositif de mesure affecté à la détermination du débit d'un fluide en circulation dans un tronçon tubulaire, comprenant
un tube mesureur (12 ; 112) muni d'une paroi tubulaire (14),
au moins un capteur (18, 20 ; 116) à ultrasons, doté d'une face supérieure (21) et conçu pour émettre un signal acoustique et/ou pour recevoir un signal acoustique
et
un élément de retenue (22),
sachant qu'il est prévu, dans la paroi tubulaire (14), au moins un orifice (28 ; 118) d'un premier type dans lequel au moins le capteur (18, 20 ; 116) à ultrasons peut être inséré, et sachant que ledit dispositif de mesure (10 ; 110) présente un état monté dans lequel l'élément de retenue (22) entoure annulairement le tube mesureur (12 ; 112) et est extérieurement en applique contre ledit capteur (18, 20 ; 116) à ultrasons, à présence minimale, inséré dans ledit orifice (28 ; 118) du premier type,
**caractérisé par le fait que** l'élément de retenue (22) est dévolu à la consignation à demeure du capteur à ultrasons, à présence minimale, lorsque le fluide circulant dans l'espace interne du tube mesureur exerce une pression sur ledit capteur à ultrasons ; et **par le fait que** ledit élément de retenue (22) repose sur la face supérieure dudit capteur à ultrasons, avec absence de pression, dans un état fonctionnel dans lequel le fluide, en circulation dans ledit tube mesureur, n'exerce aucune pression sur ledit capteur à ultrasons.

2. Dispositif de mesure selon l'une des revendications précédentes, **caractérisé par le fait que** le tube mesureur (12 ; 112) est dépourvu de filetage.

3. Dispositif de mesure selon l'une des revendications précédentes, **caractérisé par le fait que** l'élément de retenue (22) forme en coupe transversale, à l'état monté, une ligne fermée offrant le tracé d'un polygone, d'un hexagone en particulier.

4. Dispositif de mesure selon l'une des revendications précédentes, **caractérisé par le fait que** l'élément de retenue (22) présente, à l'état monté, une forme symétrique en coupe transversale.

5. Dispositif de mesure selon l'une des revendications précédentes, **caractérisé par le fait que** le tube mesureur est pourvu de surfaces d'appui, et la configuration de la section transversale de l'élément de retenue (22) est complémentaire du profil formé, sur ledit tube mesureur (12), à partir desdites surfaces d'appui.

6. Dispositif de mesure selon l'une des revendications précédentes, **caractérisé par le fait que** l'élément de retenue (22) inclut au moins deux étriers de maintien (24), au moins deux étriers de maintien (24) pouvant être reliés l'un à l'autre.

7. Dispositif de mesure selon l'une des revendications précédentes, **caractérisé par le fait que** l'élément de retenue est nanti d'un étrier de maintien comptant au moins deux zones de maintien, lesquelles zones de maintien sont reliées mutuellement suivant un angle préétabli.

8. Dispositif de mesure selon la revendication 7, **caractérisé par le fait qu'**au moins une zone de maintien est réalisée en forme de plaque.

9. Dispositif de mesure selon l'une des revendications 7 ou 8, **caractérisé par le fait qu'**au moins une zone de maintien est munie d'une bride de fixation.

10. Dispositif de mesure selon l'une des revendications 7 à 9, **caractérisé par le fait que** l'élément de retenue (22) est doté d'un étrier de maintien (24) dans lequel sont prévues deux ailes et trois zones de maintien revêtant la forme d'une base (42), sachant que lesdites ailes (44) sont situées à des extrémités de ladite base (42) pointant à l'opposé, et s'éloignent de ladite base (42) suivant un angle préétabli, et sachant qu'une bride de fixation (46) est prévue à l'extrémité libre de chaque aile (44).

11. Dispositif de mesure selon l'une des revendications 7 à 10, **caractérisé par le fait qu'**un passage (48) est prévu dans au moins une zone de maintien.

12. Dispositif de mesure selon l'une des revendications 7 à 11, **caractérisé par le fait que** le tube mesureur est pourvu de surfaces d'appui, et une surface d'appui est assignée à chaque zone de maintien sur ledit tube mesureur (12).

13. Dispositif de mesure selon l'une des revendications précédentes, **caractérisé par le fait que** la paroi tubulaire (14) du tube mesureur (12 ; 112) comporte une face extérieure qui offre un profil anguleux, en coupe transversale, et présente des zones de surface s'étendant dans la direction axiale.

14. Dispositif de mesure selon l'une des revendications précédentes, **caractérisé par le fait que** le tube mesureur (12 ; 112) comprend au moins une zone de surface (36) d'un premier type dans laquelle est prévu l'orifice (28 ; 118) du premier type, à présence minimale, destiné à recevoir le capteur (18, 20 ; 116) à ultrasons à présence minimale, ainsi qu'au moins une zone de surface (38) d'un deuxième type, contre laquelle l'élément de retenue (22) est en applique par tronçons.

15. Dispositif de mesure selon la revendication 14, **caractérisé par** la présence d'un capteur de mesure (32) comportant une face supérieure (33), et d'au moins un orifice (30) d'un second type, destiné à recevoir ledit capteur de mesure (32) dans la paroi tubulaire (14), le tube mesureur (12 ; 112) étant pourvu d'au moins une zone de surface (40) d'un troisième type, sur laquelle ledit capteur de mesure (32) est implanté.

16. Dispositif de mesure selon l'une des revendications précédentes, **caractérisé par** la présence d'une multiplicité de capteurs (18, 20 ; 116) à ultrasons, deux capteurs respectifs (18, 20 ; 116) à ultrasons formant une paire (16) d'émission-réception, et étant agencés dans la direction axiale du tube mesureur (12 ; 112), sachant qu'il est prévu au moins deux paires (16) d'émission-réception implantées le long du pourtour dudit tube mesureur (12 ; 112).
